# EUROPÄISCHE PATENTSCHRIFT

(11) **EP 2 098 286 B1**
(45) Veröffentlichungstag und Bekanntmachung des Hinweises auf die Patenterteilung: **06.11.2013**
(21) Anmeldenummer: 09002880.4
(22) Anmeldetag: 27.02.2009
(51) Int. Cl.: B01J 19/18, C09D 7/14

(54) **Vorrichtung und Verfahren zur Herstellung einer Lösung**
Apparatus and process for preparing a solution
Appareillage et procédé pour faire une solution

(30) Priorität: 27.02.2008 DE 102008011253
(43) Veröffentlichungstag der Anmeldung: 09.09.2009
(73) Patentinhaber: SÜDDEKOR GmbH, 89150 Laichingen (DE)
(72) Erfinder: Otting, Matthias, Dr., 89150 Laichingen (DE)
(74) Vertreter: Müller-Boré & Partner Patentanwälte

(56) Entgegenhaltungen:
- EP-A- 1 741 761
- EP-A- 1 813 653
- US-A1- 2003 152 500
- US-A1- 2007 025 178

## Beschreibung

Die vorliegende Erfindung betrifft ein System und ein Verfahren.

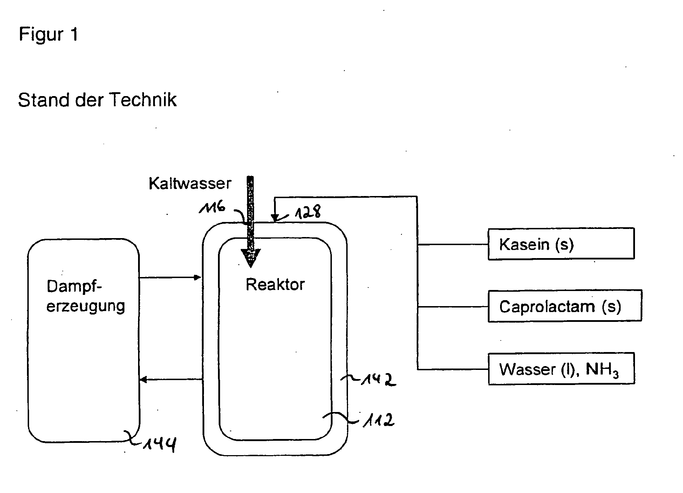

Konventionell werden Bindemittel für Dekortiefdruckfarben und -verschnitte im wesentlichen aus technischem Kasein und Caprolactam gewonnen. Während Caprolactam regelmäßig in wasserlöslichen Tabletten vorliegt, muß Kasein hingegen zunächst alkalisch aufgeschlossen werden. Ein System des Standes der Technik ist beispielhaft in Figur 1 dargestellt. Herkömmlicherweise werden Kasein und Caprolactam unter Zugabe von Wasser und Ammoniak und eines oder mehreren Additiven in einem Reaktor 112 verrührt. Hierzu werden Kasein und Caprolactam unter Zugabe von Wasser und Ammoniak und eines oder mehreren Additiven über einen Zugang 128 dem Reaktor 112 zugeführt und verrührt. Der Reaktor 112 ist insbesondere doppelwandig ausgeführt, so daß das Innere des Reaktors 112, in welches das vorgenannte Gemenge eingebracht ist, von einem Hohlraum 142 umgeben ist. In einer externen Dampferzeugungseinrichtung 144 wird Wasserdampf erzeugt und in den Hohlraum 142 eingeführt, so daß das Gemenge im Inneren des Reaktors 112 auf etwa 70°C erwärmt wird, ohne daß das Gemenge mit dem Wasserdampf in Kontakt kommt. In diesem Fall hängt die Reaktionsgeschwindigkeit stark von der Lösungsgeschwindigkeit des Kaseins und des Caprolactams ab. Gegebenenfalls kann auch weiteres Kaltwasser zum Verdünnen des Gemenges über einen Kaltwasserzugang 116 zugeführt werden. Mittels des vorbeschriebenen Systems wird die Lösung der Feststoffe ausschließlich durch intensives Rühren in dem Reaktor 112 erreicht.

In US 2007/0025178 A1 wird eine Vorrichtung sowie ein Verfahren zur Herstellung einer Pigmentdispersion offenbart, wobei, nachdem eine Lösung bereitgestellt wird, Pigmentteilchen hinzugefügt werden, die mechanisch verkleinert werden. Das Verfahren wird wiederholt, d.h. durch Zirkulation zwischen einer Speichereinrichtung und einer Bearbeitungseinrichtung, und kontinuierlich betrieben, wobei die Reduktion der Teilchengröße insbesondere darauf basiert, dass die Konzentration an festen Pigmentteilchen mehr als 35 Gew.-% beträgt.

Es ist eine Aufgabe der vorliegenden Erfindung, eine Lösung effektiver, insbesondere schneller und mit weniger Energieaufwand bereitzustellen. Diese Aufgabe wird anhand des Systems gemäß Anspruch 1 und des Verfahrens gemäß Anspruch 8 gelöst. Bevorzugte Ausführungsformen sind Gegenstand der abhängigen Ansprüche.

### System gemäß einem Aspekt der vorliegenden Erfindung

Ein Aspekt der vorliegenden Erfindung betrifft ein System zum Herstellen einer Lösung, insbesondere eines Bindemittels für Tiefdruckfarbe mit
- zumindest einer Grundstoffbereitstellungseinrichtung,
- zumindest einer Bearbeitungseinrichtung und
- zumindest einer Speichereinrichtung, wobei
die Grundstoffbereitstellungseinrichtung, die Bearbeitungseinrichtung und die Speichereinrichtung derart miteinander verbunden sind, daß
der Bearbeitungseinrichtung zumindest ein Grundstoff von der Grundstoffbereitstellungseinrichtung und ein warmes Lösungsmittel zuführbar sind, wobei die Bearbeitungseinrichtung ausgelegt ist, die Teilchengröße des zumindest einen Grundstoffs derart anzupassen, daß sich der zumindest eine Grundstoff zumindest teilweise in dem warmen Lösungsmittel löst und somit eine Lösung herstellbar ist, und die Bearbeitungseinrichtung genau einen Lösungsmittelzugang aufweist, der mit einem Lösungsmittelausgang der Speichereinrichtung verbunden ist,
wobei die Bearbeitungseinrichtung ausgelegt ist, Abwärme der Bearbeitungseinrichtung an das warme Lösungsmittel und/oder die Lösung abzugeben und die Bearbeitungseinrichtung und die Speichereinrichtung derart thermisch miteinander verbunden sind, daß mittels der Abwärme der Bearbeitungseinrichtung die Speichereinrichtung gewärmt wird.

Die Lösung kann ein Bindemittel sein. Die Grundstoffe können auch so gewählt werden, daß die Lösung eine Tiefdruckfarbe ist.

Folglich wird vorteilhafterweise die Lösung bereits in der Bearbeitungseinrichtung zumindest teilweise erzeugt. Hierbei ist es nicht notwendig, daß in der Bearbeitungseinrichtung der zumindest eine Grundstoff vollständig in dem warmen Lösungsmittel gelöst ist. Vielmehr kann der zumindest eine Grundstoff lediglich teilweise gelöst sein und der nicht gelöste Grundstoff mit der erstellten Lösung eine Dispersion bilden. Weiterhin kann der zumindest eine Grundstoff, der mit der Lösung eine Dispersion bildet, auch außerhalb der Bearbeitungseinrichtung zumindest teilweise, insbesondere vollständig in Lösung gehen. Beispielsweise kann der zumindest eine Grundstoff in der Bearbeitungseinrichtung zumindest teilweise gelöst werden und der verbleibende Grundstoff, der eine Dispersion bildet in der Speichereinrichtung im wesentlichen vollständig in der Lösung gelöst werden, vorzugsweise vollständig in der Lösung gelöst werden. Der zumindest ein Grundstoff kann auch in der Bearbeitungseinrichtung vollständig gelöst werden. Der zumindest eine Grundstoff kann in der Bearbeitungseinrichtung zwischen etwa 1% und etwa 90%, vorzugsweise zwischen etwa 5% und etwa 75%, besonders bevorzugt zwischen etwa 10% und etwa 25%, insbesondere weniger als etwa 1%, 5%, 10%, 15%, 20%, 25%, 50%, 75% oder 90% gelöst werden. Folglich kann die Bearbeitungseinrichtung auch als Lösungseinrichtung dienen.

Ebenso kann der zumindest eine Grundstoff außerhalb der Bearbeitungseinrichtung, insbesondere in der Speichereinrichtung zwischen etwa 1 % und etwa 90%, vorzugsweise zwischen etwa 5% und etwa 75%, besonders bevorzugt zwischen etwa 10% und etwa 25%, insbesondere weniger als etwa 1%, 5%, 10%, 15%, 20%, 25%, 50%, 75% oder 90% gelöst werden. Insbesondere kann der zumindest eine Grundstoff in der Bearbeitungseinrichtung nicht oder nur teilweise gelöst werden und außerhalb der Bearbeitungseinrichtung, beispielsweise in Rohrleitungen und/oder der Speichereinrichtung im wesentlichen vollständig gelöst werden. Dies kann ein kontinuierlicher Prozeß sein.

Insbesondere vorteilhafterweise ist die Lösung des zumindest einen Grundstoffes aufgrund des warmen Lösungsmittel möglich. Aufgrund des warmen Lösungsmittels können die einzelnen Grundstoffe leichter bzw. schneller in Lösung gehen. Beispielsweise kann das warme Lösungsmittel warmes Wasser sein, in welchem die Grundstoffe zumindest teilweise gelöst werden. Besonders vorteilhafterweise wird gemäß der vorliegenden Erfindung ein uneffektives Beheizen des zu mischenden Gemenges vermieden. Da herkömmliche Speichereinrichtungen, wie der oben beschriebene Reaktor, häufig aus Edelstahl hergestellt sind, wobei Edelstahl eine schlechte Wärmeleitfähigkeit aufweist, ist auch die konventionelle Erwärmung des Gemenges in dem Edelstahlbehälter durch Wasserdampf uneffektiv.

Gemäß der vorliegenden Erfindung kann zum einen die Lösung zumindest teilweise außerhalb der Speichereinrichtung hergestellt werden, nämlich in der Bearbeitungseinrichtung. Folglich ist es nicht nötig, die Speichereinrichtung zum Herstellen der Lösung zu beheizen. Zum anderen wird gemäß der vorliegenden Erfindung ein warmes Lösungsmittel verwendet, wodurch ebenfalls eine umständliche und uneffektive Erwärmung der Speichereinrichtung insbesondere zur (weiteren) Lösung des zumindest einen Grundstoffes vermieden wird. Vielmehr ermöglicht das System, insbesondere aufgrund des warmen Lösungsmittels eine deutlich verringerte Ansatzdauer, d.h. eine deutlich verringerte Herstellungsdauer zum Herstellen der Lösung. Ebenso ist das System weiterhin vorteilhafterweise unabhängig von einer externen Wärmezufuhr. Das System ist unabhängig von einer externen Dampferzeugung, wodurch das System vorteilhafterweise sehr geringe Betriebs- und auch Wartungskosten aufweist.

Der Begriff "Lösung", wie er im Sinne der vorliegenden Erfindung verwendet wird, beschreibt ein homogenes Gemisch, das aus zwei oder mehr Stoffen, insbesondere chemisch reinen Stoffen besteht. Sie enthält einen oder mehrere gelöste Stoffe, die auch Solute genannt werden und die im Sinne der vorliegenden Erfindung auch als Grundstoffe bezeichnet werden, und ein Lösungsmittel, das selbst eine Lösung sein kann. Zwar kann eine Lösung fest, flüssig oder gasförmig sein, im Sinne der vorliegenden Erfindung ist eine Lösung vorzugsweise flüssig.

Der Begriff "Dispersion", wie er im Sinne der vorliegenden Erfindung verwendet wird, beschreibt ein heterogenes Gemenge aus mindestens zwei Stoffen, die sich nicht oder kaum oder langsam ineinander lösen oder chemisch miteinander verbinden. Beispielsweise kann es sich hierbei um Kolloide handeln. Insbesondere wird ein Stoff oder werden mehrere Stoffe, d.h. zumindest ein Grundstoff, der auch als dispergierte Phase, disperse Phase, innere Phase oder Nebenphase bezeichnet werden kann, möglichst fein in einem anderen Stoff, der auch als Dispersionsmittel, Dispergens, kontinuierliche Phase, äußere Phase oder Hauptphase bezeichnet wird, verteilt. Das Dispersionsmittel bzw. Dispergens kann auch eine Lösung sein. Die einzelnen Phasen können beispielsweise deutlich von einander abgegrenzt werden und möglicherweise durch physikalische Methoden wieder voneinander getrennt werden, beispielsweise durch Filterprozesse und/oder Zentrifugalprozesse. Gegebenenfalls können sich die einzelnen Phasen auch von selbst entmischen d.h. sedimentieren.

### Bevorzugte Ausführungsformen des Systems

Die Bearbeitungseinrichtung weist genau einen Lösungsmittelzugang auf, der mit einem Lösungsmittelausgang der Speichereinrichtung verbunden ist.

In anderen Worten wird der Bearbeitungseinrichtung Lösungsmittel vorzugsweise ausschließlich von der Speichereinrichtung zugeführt.

Vorzugsweise sind die Bearbeitungseinrichtung und die Speichereinrichtung in einem Kreislauf angeordnet sind, wobei die Bearbeitungseinrichtung ausgelegt ist, die Lösung an die Speichereinrichtung abzugeben und die Speichereinrichtung ausgelegt ist, das warme Lösungsmittel an die Bearbeitungseinrichtung abzugeben.

Besonders bevorzugt kann der Bearbeitungseinrichtung warmes Lösungsmittel ausschließlich über die Speichereinrichtung zugeführt werden. In anderen Worten weißt die Bearbeitungseinrichtung vorzugsweise nur einen Lösungsmittelzugang auf, der mit einem Ausgang der Speichereinrichtung verbunden ist.

Weiterhin vorzugsweise ist die Speichereinrichtung ausgelegt, daß in der Speichereinrichtung die Lösung und das warme Lösungsmittel zu dem warmen Lösungsmittel vermischt werden, das an die Bearbeitungseinrichtung abgegeben wird.

In anderen Worten kann gemäß der vorliegenden Erfindung die Lösung kontinuierlich hergestellt werden, wobei in einem Kreislauf die Lösung zumindest teilweise hergestellt wird und an die Speichereinrichtung abgegeben wird. In dieser Speichereinrichtung kann die bereits erstellte Lösung, die gegebenenfalls mit den nicht gelösten Grundstoff(en) eine Dispersion bildet, zusätzlich mit einem (weiteren) Lösungsmittel vermischt werden, d.h. die Lösung bzw. Dispersion gegebenenfalls verdünnt werden. Weiterhin vorzugsweise wird die in der Speichereinrichtung vorhandene Lösung bzw. Dispersion als Lösungsmittel an die Bearbeitungseinrichtung abgegeben. Dieses Lösungsmittel (d.h. die aus der Speichereinrichtung an die Bearbeitungseinrichtung abgegebene Lösung bzw. Dispersion) kann in der Bearbeitungseinrichtung mit weiteren Grundstoffen versehen werden. Es ist auch möglich, daß keine weiteren Grundstoffe mehr zugeführt werden. Vielmehr kann das Lösungsmittel auch ohne Zugabe von weiteren Grundstoffen durch die Bearbeitungseinrichtung geleitet werden.

Folglich kann das System verschiedene Betriebszustände aufweisen. Zum einen kann das System derart betrieben werden, daß in der Bearbeitungseinrichtung das warme Lösungsmittel mit einem oder mehreren Grundstoffen versetzt wird, die sich bereits in der Bearbeitungseinrichtung zumindest teilweise lösen können. Anschließend kann diese Lösung, in der weitere, nicht gelöste Grundstoffe dispergiert sein können, in die Speichereinrichtung abgegeben, insbesondere gepumpt werden. In der Speichereinrichtung kann die Lösung mit weiterem warmen Lösungsmittel vermischt werden. Weiterhin kann sich der noch nicht gelöste zumindest ein Grundstoff in der Speichereinrichtung weiter lösen. Diese vermischte, insbesondere verdünnte Lösung wird von der Speichereinrichtung wieder an die Bearbeitungseinrichtung abgegeben. Folglich ist die Lösung, wie sie aus der Speichereinrichtung austritt ein Lösungsmittel, wenn sie in der Bearbeitungseinrichtung mit weiteren Grundstoffen versetzt wird bzw. wenn der in der Dispersion vorhandene Grundstoff darin gelöst wird.

Weiterhin kann es möglich sein, daß die Bearbeitungseinrichtung einen Zugang für ein externes warmes Lösungsmittel aufweist und einen getrennten Zugang für das warme Lösungsmittel aus der Speichereinrichtung. Das externe warme Lösungsmittel kann beispielsweise warmes Wasser sein. Das externe warme Lösungsmittel und das warme Lösungsmittel aus der Speichereinrichtung können somit in der Bearbeitungseinrichtung vermischt werden und gegebenenfalls mit weiteren Grundstoffen versetzt werden.

Vorzugsweise sind die Speichereinrichtung und die Bearbeitungseinrichtung ausgelegt, kontinuierlich zu arbeiten.

In anderen Worten kann die Lösung kontinuierlich hergestellt werden, wobei das Lösungsmittel aus der Speichereinrichtung kontinuierlich durch die Bearbeitungseinrichtung strömt. Es ist nicht notwendig, daß in der Bearbeitungseinrichtung kontinuierlich Grundstoffe zugefügt werden. Vielmehr kann eine bestimmte Menge Grundstoff zugefügt werden. Nach Zufügung der bestimmten Menge Grundstoff kann die Lösung, die aufgrund (noch) nicht gelöster Grundstoffe zumindest zeitweise eine Dispersion bilden kann, die Bearbeitungseinrichtung durchströmen, ohne weitere Zugabe von Grundstoff.

Weiterhin kann die Bearbeitungseinrichtung auch diskontinuierlich arbeiten, derart, daß eine bestimmte Menge an Lösung hergestellt wird und diese Menge an Lösung in der Speichereinrichtung gehalten und insbesondere gemischt wird und nicht mehr in die Bearbeitungseinrichtung abgegeben wird.

Besonders bevorzugt weist das warme Lösungsmittel eine Temperatur zwischen etwa 40°C und etwa 90°C, vorzugsweise zwischen etwa 50°C und etwa 80°C, etwa 70°C bis etwa 80°C besonders bevorzugt von etwa 75°C weiterhin besonders bevorzugt von etwa 70°C auf.

Die Bearbeitungseinrichtung ist ausgelegt, Abwärme der Bearbeitungseinrichtung an das warme Lösungsmittel abzugeben.

Somit kann Wärmeverlust des warmen Lösungsmittels ausgeglichen werden, der durch Lösung des zumindest einen Grundstoffes in dem warmen Lösungsmittel entsteht.

Die Bearbeitungseinrichtung und die Speichereinrichtung sind derart thermisch miteinander verbunden, daß mittels der Abwärme der Bearbeitungseinrichtung die Speichereinrichtung gewärmt wird.

In anderen Worten wird dem warmen Lösungsmittel bzw. der Lösung durch Abwärme der Bearbeitungseinrichtung Energie in Form von Wärme zugeführt. Dadurch wird vorteilhafterweise eine externe Wärmezufuhr und somit auch eine externe Wärmeeinrichtung vermieden. In anderen Worten kann dem warmen Lösungsmittel bzw. der Lösung Wärme zugeführt werden, ohne daß dafür zusätzlich Energie notwendig ist. Vor allem eine externe Dampferzeugungseinrichtung ist nicht notwendig.

Gemäß der vorliegenden Erfindung wurde erkannt, daß gemäß dieser Ausführungsform der Lösungsprozeß besonders effektiv ist, da keine zusätzliche Wärme von Außen dem System aus Bearbeitungseinrichtung und Speichereinrichtung zugeführt werden muß. Vielmehr ist es möglich, Wärme, die dem Lösungsmittel bzw. der Lösung während des Lösungsprozesses verloren geht, in einfacher und effektiver dem Lösungsmittel bzw. der Lösung wieder zuzuführen. Somit kann das Lösungsmittel bzw. die Lösung in einfacher und effektiver Weise auf einer vorgegebenen Temperatur gehalten werden und/oder bis zu einer vorgegebenen Temperatur geheizt werden. Durch die Zugabe von Abwärme kann auch das Abkühlen des Lösungsmittels und/oder oder der Lösung gezielt kontrolliert werden.

Ferner kann Abwärme, die an die Umgebung abgegeben wird, dem Lösungsmittel bzw. der Lösung wieder zugefügt werden. Besonders bevorzugt kann dies erreicht werden, indem die Bearbeitungseinrichtung direkt mit der Speichereinrichtung, insbesondere der in der Speichereinrichtung vorhandenen Lösung thermisch verbunden ist. Beispielswiese kann eine Kühleinrichtung der Bearbeitungseinrichtung thermisch, insbesondere direkt thermisch mit der Speichereinrichtung, insbesondere der in der Speichereinrichtung vorhandenen Lösung verbunden sein. Hierbei kann die Bearbeitungseinrichtung sowohl mit der in der Speichereinrichtung vorhandenen Lösung thermisch verbunden sein als auch mit der Speichereinrichtung selbst, so daß sowohl die in der Speichereinrichtung vorhandene Lösung als auch die Speichereinrichtung selbst, z.B. eine Wand der Speichereinrichtung mit Abwärme der Bearbeitungseinrichtung gewärmt bzw. geheizt wird.

In Kombination mit einer thermischen Isolierung der Speichereinrichtung gegenüber der Umgebung ist somit der Lösungsprozeß besonders effektiv.

Insbesondere ist es möglich, daß die Abwärme der Bearbeitungseinrichtung direkt an das warme Lösungsmittel bzw. an die warme Lösung abgegeben wird, wenn das warme Lösungsmittel bzw. die warme Lösung die Bearbeitungseinrichtung durchströmt. Folglich kann insbesondere eine konventionelle Speichereinrichtung aus Edelstahl bzw. einer edelstahlhaltigen Legierung verwendet werden, die eine geringe Wärmeleitfähigkeit aufweist, da keine thermische Kopplung durch die Wand der Speichereinrichtung notwendig ist. Vielmehr kann die geringe Leitfähigkeit gerade ausgenutzt werden, um die in der Speichereinrichtung vorhandene warme Lösung (bzw. das aufgrund nicht gelöster Grundstoffe warme Dispergens) warm zu halten. Weitere notwendige Wärme wird vorzugsweise durch Abwärme der Bearbeitungseinrichtung zugeführt.

Der Begriff "gewärmt", wie er im Sinne der vorliegenden Erfindung verwendet wird, beschreibt insbesondere, daß das warme Lösungsmittel bzw. die warme Lösung auf einer im wesentlichen konstanten Temperatur gehalten wird. Hierbei können technisch bedingte Schwankungen vorliegen. Diese Schwankungen können etwa 1%, etwa 2%, etwa 5%, etwa 10%, etwa 15% oder etwa 20% der Solltemperatur betragen. Weiterhin kann der Begriff "gewärmt", wie er im Sinne der vorliegenden Erfindung verwendet wird, beschreiben, daß die Temperatur des warmen Lösungsmittels bzw. der warmen Lösung erhöht wird.

Das warme Lösungsmittel ist vorzugsweise ein Lösungsmittel auf Wasserbasis, insbesondere warmes Wasser, das einer Warmwasserleitung entnommen ist. Die Wärmezufuhr in das warme Lösungsmittel sobald sich dieses in dem Kreislauf aus Bearbeitungseinrichtung und Speichereinrichtung befindet wird vorzugsweise ausschließlich mittels der Bearbeitungseinrichtung durchgeführt. Somit ist dieser Kreislauf frei von weiteren Wärme- bzw. Heizeinrichtungen.

Vorzugsweise ist die Bearbeitungseinrichtung eine Dispergierungsmaschine, insbesondere eine inline Dispergierungsmaschine.

Der Begriff "Dispergierungsmaschine" wie er im Sinne der vorliegenden Erfindung verwendet wird, beschreibt eine Maschine mit einer Dispergier- und Benetzungskammer bzw. -zone in die Pulver, insbesondere der zumindest eine Grundstoff, und Flüssigkeit, insbesondere das warme Lösungsmittel, von verschiedenen Seiten gelangen. In der Benetzungszone kommen diese miteinander in Kontakt. Hierbei wird anhand der Dispergierungsmaschine im Moment der Benetzung, d.h. bei in Kontakt Treten der Flüssigkeit mit dem Pulver die Oberfläche der Flüssigkeit erheblich vergrößert, wobei in der Flüssigkeit ein Vakuum aufgebaut wird, so daß das Pulver im wesentlichen vollständig in die Flüssigkeit eingesogen wird. Weiterhin vergrößern sich unter Vakuum, durch die Expansion der im Pulver enthaltenen Luft bzw. Gas die Teilchenabstände und die Teilchengeschwindigkeit des Pulvers erheblich. Somit wird ein leichteres Eindringen der Flüssigkeit in das Pulver, ein im wesentlichen vollständiges Benetzen und somit auch eine verbesserte Lösung der Teilchen in der Flüssigkeit erreicht.

In anderen Worten wurde gemäß der bevorzugten Ausführungsform erkannt, daß ein zeit- und energieaufwendiges Lösen des zumindest einen Grundstoffes in dem Lösungsmittel durch aufwendiges Mischen in der Speichereinrichtung und Beheizen der Speichereinrichtung, die beispielsweise ein herkömmlicher Reaktor sein kann, durch Einsatz einer Dispergierungsmaschine vermindert, insbesondere vermieden werden kann. Zwar wird anhand der Dispergierungsmaschine nicht in erste Linie eine Dispersion hergestellt. Es wurde jedoch erkannt, daß die Dispergierungsmaschine eine verbesserte Lösung des zumindest einen Grundstoffes in dem Lösungsmittel ermöglicht. Zu diesem Zweck weist die Dispergierungsmaschine insbesondere ein Mahlwerk bzw. eine Verkleinerungseinrichtung auf, mittels der der zumindest eine Grundstoff verkleinert werden kann. Die Dispergierungsmaschine wird somit in erster Linie zum verbesserten Lösen und nicht zum Dispergieren eingesetzt.

Bevorzugt ist die Bearbeitungseinrichtung ausgelegt, die Grundstoffe zu zerkleinern, wobei die Grundstoffe auf eine Teilchengröße von etwa 10 µm bis etwa 70 µm, vorzugsweise etwa 15 µm bis etwa 40 µm, besonders bevorzugt etwa 25 µm zerkleinert werden.

In anderen Worten kann die Bearbeitungseinrichtung durch einen Einlaß oder mehrere Einlässe einen oder mehrere Grundstoffe aufnehmen. Insbesondere kann für jeden zuzufügenden Grundstoff ein Einlaß vorliegen. Beispielsweise können Grundstoffe in Form eines Pulvers vorliegen. Das Pulver kann in der Bearbeitungseinrichtung weiter zerkleinert, insbesondere gemahlen werden. Beispielsweise kann ein Grundstoff in Tablettenform vorliegen und in der Bearbeitungseinrichtung auf die notwendige Größe zerkleinert werden. In anderen Worten kann beispielsweise ein Grundstoff in Pulverform durch einen Einlaß in die Bearbeitungseinrichtung eingebracht, insbesondere gepumpt werden. Ein weiterer Grundstoff kann durch einen weiteren Einlaß in Tablettenform in die Bearbeitungseinrichtung eingebracht werden. Es kann auch möglich sein, daß erst ein Grundstoff vollständig eingebracht wird, insbesondere im wesentlichen vollständig gelöst wird und anschließend, falls notwendig, ein oder mehrere weitere Grundstoffe eingebracht und gelöst werden. Alternativ oder zusätzlich können auch ein oder mehrere Grundstoffe, beispielsweise in Pulverform, vorab gemischt werden und das gemischte Pulver in die Bearbeitungseinrichtung eingebracht und gelöst werden.

Weiterhin kann die erstellte Lösung, wie oben ausgeführt, in die Speichereinrichtung gebracht werden und als Lösungsmittel wieder der Bearbeitungseinrichtung zugeführt werden. Insbesondere ist dies vorteilhaft, falls in einem ersten Lösungsschritt, d.h. beim Zufügen des Grundstoffes in die Bearbeitungseinrichtung, der Grundstoff noch nicht vollständig auf die gewünschte Teilchengröße verkleinert wird. Beispielsweise ist es möglich, daß in einem ersten Lösungsschritt der Grundstoff mittels der Bearbeitungseinrichtung auf eine Teilchengröße von etwa 40 µm verkleinert wird. In einem oder mehreren weiteren Lösungsschritten kann die Teilchengröße des Grundstoffes (in der Dispersion bestehend aus Lösungsmittel und nicht gelöstem Grundstoff) verkleinert werden, bis beispielsweise die Teilchengröße etwa 25 µm erreicht. Der Grundstoff ist um so leichter löslich, je kleiner er gemahlen wird. Insbesondere hat sich herausgestellt, daß eine Teilchengröße von etwa 25 µm eine besonders gute Löslichkeit ermöglicht. Somit kann es möglich sein, daß verschiedene Teilchengrößen vorliegen, wobei die kleineren Teilchen besonders schnell gelöst werden und die noch nicht gelösten, größeren Teilchen, d.h. insbesondere Teilchen größer als 25 µm, wieder der Bearbeitungseinrichtung zugeführt werden und dort wiederum verkleinert werden.

Vorzugsweise kann die Abwärme, die durch das verkleinern des zumindest einen Grundstoffes entsteht abgegeben werden. Es ist auch möglich, daß Abwärme abgegeben wird, ohne daß eine aktive Verkleinerung notwendig ist. In anderen Worten kann die Bearbeitungseinrichtung auch betrieben werden, ohne daß es notwendig ist, den zumindest einen Grundstoff weiter zu verkleinern. Die Bearbeitungseinrichtung dient in diesem Fall in erster Linie, besonders bevorzugt ausschließlich zum wärmen der Lösung und/oder der Speichereinrichtung.

Vorzugsweise umfassen die Grundstoffe technisches Kasein und/oder Caprolactam und/oder Ammoniak und/oder zumindest ein Additiv. Beispielsweise kann ein Additiv ein Fungizid sein.

Der Begriff "Caprolactam", wie er im Sinne der vorliegenden Erfindung verwendet wird, beschreibt einen Stoff, der bei Raumtemperatur weiße Kristalle bildet, die gut in Wasser löslich und hygroskopisch sind. Caprolactam wird daher bis zur Verwendung vorzugsweise bei Temperaturen über 80 °C gelagert. Beim stärkeren Erhitzen von Caprolactam zersetzt sich dieses unter Bildung von u. a. Ammoniak und Stickoxiden.

Der Begriff "Kasein", wie er Sinne der vorliegenden Erfindung verwendet wird, beschreibt ein grobflockig gerinnendes Protein (Eiweiß) Das ungeronnene Protein kann auch als Caseionogen bzw. Kaseionogen bezeichnet werden. Es kann zwischen nativem und technischen Kasein unterschieden werden. Natives Kasein wird hauptsächlich durch Mikrofiltration gewonnen. Als Trennkriterium dient dabei die Partikelgröße. Im Retentat verbleiben hauptsächlich Kaseine und kleinere Anteile an Molkenprotein sowie Lactose, im Permeat befinden sich hauptsächlich Mineralsalze, Lactose, Molkenproteine und kleine Anteile an Kaseinsubmizellen. Technisches bzw. denaturiertes bzw. funktionell verändertes Kasein bzw. Kaseinat läßt sich mit Hilfe einer Säurefällung und anschließender Neutralisierung mittels Calciumhydroxid, Kaliumhydroxid oder Natronlauge herstellen. Durch Filtration oder Zentrifugation wird anschließend das denaturierte Kasein abgetrennt. In den meisten Fällen wird das zu fällende Protein mittels verschiedener Verfahren zuvor aufkonzentriert.

### Verfahren gemäß einem Aspekt der Erfindung

Ein Aspekt der vorliegenden Erfindung betrifft ein Verfahren zum Herstellen einer Lösung, insbesondere eines Bindemittels für Tiefdruckfarbe, mit den Schritten:
- Bereitstellen zumindest eines Grundstoffes,
- Bereitstellen eines warmen Lösungsmittels,
- Zuführen des zumindest einen Grundstoffes und des warmen Lösungsmittels in zumindest eine Bearbeitungseinrichtung,
- Herstellen einer Lösung mittels des zumindest einen Grundstoffes und des warmen Lösungsmittels dadurch, daß der zumindest eine Grundstoff mittels der Bearbeitungseinrichtung auf eine vorgegebene Teilchengröße angepaßt wird, so daß sich der zumindest eine Grundstoff zumindest teilweise in dem warmen Lösungsmittel löst und
- Zuführen der Lösung in zumindest eine Speichereinrichtung,
wobei das warme Lösungsmittel in der Speichereinrichtung mit der Abwärme der Bearbeitungseinrichtung gewärmt wird.

Vorzugsweise umfaßt das Verfahren die weiteren Schritten:
- Mischen der Lösung mit dem warmen Lösungsmittel in der Speichereinrichtung und
- Zuführen der Mischung aus Lösung und warmen Lösungsmittel als warmes Lösungsmittel in die Bearbeitungseinrichtung.
   Weiterhin vorzugsweise werden die Schritte
- Zuführen des zumindest einen Grundstoffes und des warmen Lösungsmittel in die Bearbeitungseinrichtung,
- Herstellen der Lösung mittels des zumindest einen Grundstoffes und des warmen Lösungsmittels,
- Zuführen der Lösung in die Speichereinrichtung und
- Mischen der Lösung mit dem warmen Lösungsmittel in der Speichereinrichtung
wiederholt, insbesondere kontinuierlich durchgeführt werden.

Besonders bevorzugt wird das warme Lösungsmittel in der Speichereinrichtung mit der Abwärme der Bearbeitungseinrichtung gewärmt.

Zusätzlich kann das warme Lösungsmittel bzw. die Lösung auch in der Bearbeitungseinrichtung gewärmt werden.

### Weiterhin vorzugsweise umfaßt das Verfahren den weiteren Schritt:

Kühlen des Bindemittels nach Herstellen des Bindemittels.

Insbesondere kann das Bindemittel auf etwa 40°C gekühlt werden.

Die Erfindung ist nicht auf die oben beschriebenen Aspekte bzw. Ausführungsformen beschränkt. Vielmehr können einzelne Merkmale der Aspekte und/oder Ausführungsformen beliebig miteinander kombiniert werden und insbesondere somit neue Ausführungsformen gebildet werden. In anderen Worten gelten die obigen Ausführungen zu den einzelnen Merkmalen des Systems sinngemäß auch für das Verfahren und umgekehrt.

### Figurenbeschreibung

Nachfolgend werden bevorzugte Ausführungsformen der vorliegenden Erfindung anhand begleitender Zeichnungen beispielhaft beschrieben. Insbesondere zeigt
- Figur 1:: eine schematische Ansicht des Standes der Technik;
- Figur 2:: eine schematische Ansicht eines Systems;
- Figur 3:: eine weitere schematische Ansicht.

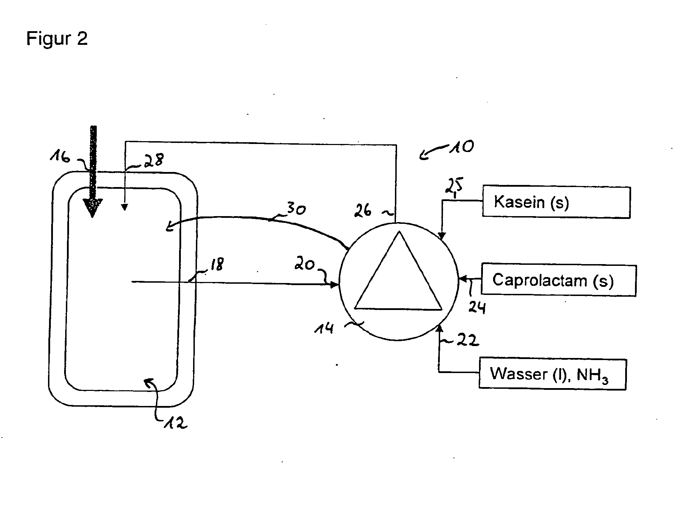

Figur 2 zeigt eine Schemaansicht eines beispielhaften Systems10. Das System 10 umfaßt einen Reaktor 12 als bevorzugter Speichereinrichtung und eine Bearbeitungseinrichtung 14. Die Bearbeitungseinrichtung 14 kann insbesondere eine sogenannte Inlinedispergierungsmaschine sein, wie sie zum Beispiel die Firma Ystral herstellt und vertreibt.

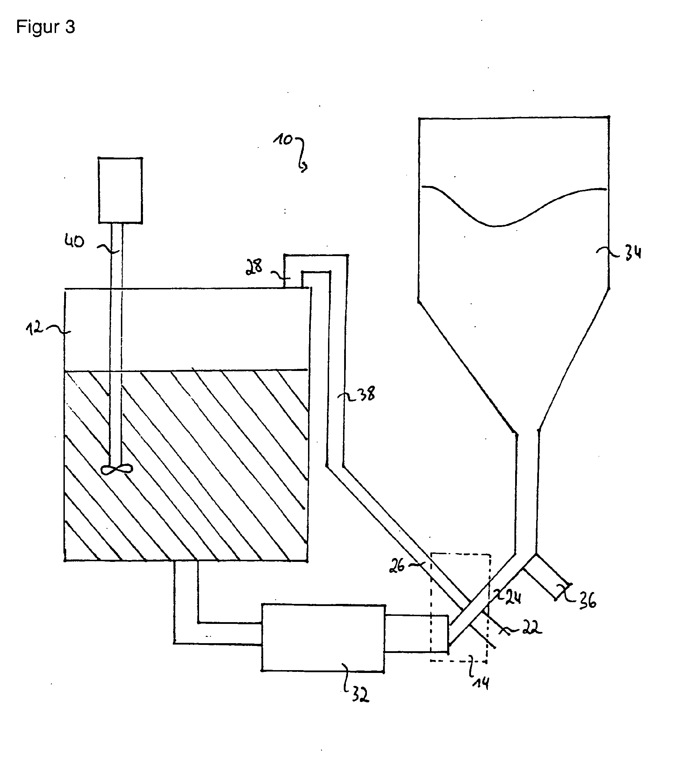

Der Reaktor 12 hat eine Warmwasserzufuhr 16 und einen Ausgang 18, mittels dessen ein in dem Reaktor 12 befindliches Material der Bearbeitungseinrichtung 14 zugeführt werden kann. Hierzu weist die Bearbeitungseinrichtung 14 einen Eingang 20 auf. Zusätzlich kann die Bearbeitungseinrichtung 14 auch einen gesonderten Eingang 22 in Form einer Warmwasserzufuhr 22 aufweisen. Das Warmwasser dient hierbei als bevorzugtes Lösungsmittel, mit dem mit einem oder mehreren Grundstoffen, wie zum Beispiel Kasein und/oder Caprolactam eine Lösung hergestellt wird. Das Kasein kann beispielsweise mittels eines Eingangs 24 und das Caprolactam mittels eines Eingangs 25 der Bearbeitungseinrichtung 14 zugeführt werden. Es kann auch lediglich ein gemeinsamer Eingang für zwei oder mehrere Grundstoffe vorliegen. Beispielsweise können zwei oder mehrere Grundstoffe nacheinander über einen Eingang zugeführt werden. Es ist auch möglich, daß die Grundstoffe vorab gemischt werden und anschließend als Grundstoffmischung über einen eigenen Eingang der Bearbeitungseinrichtung 14 zugeführt werden. Die Grundstoffe können in einer oder mehrerer Grundstoffbereitstellungseinrichtung(en) (gezeigt in Figur 3) gespeichert sein. Durch die Warmwasserzufuhr 22 kann auch Ammoniak zugeführt werden. Ammoniak kann zusätzlich oder alternativ zu Warmwasser zugeführt werden. Es ist möglich, daß erst Warmwasser und anschließend Ammoniak zugeführt wird. Alternativ kann auch erst Ammoniak und anschließend Warmwasser zugeführt werden. Ammoniak und Warmwasser können auch abwechselnd oder gleichzeitig zugeführt werden. Ammoniak kann in dem Warmwasser gelöst sein.

Alternativ oder zusätzlich können die Grundstoffe bzw. das Grundstoffgemisch auch Farbstoffe enthalten. In anderen Worten ist es möglich, daß die Lösung ein Bindemittel für eine Tiefdruckfarbe ist. Es ist auch möglich, daß die Lösung eine Tiefdruckfarbe ist.

Das Wasser kann beispielsweise durch die Warmwasserzufuhr 22 der Bearbeitungseinrichtung 14 zugeführt werden und/oder durch den Eingang 20 der Bearbeitungseinrichtung 14 zugeführt werden. Beispielsweise kann in einem einleitenden Schritt warmes Wasser der Bearbeitungseinrichtung 14 mittels der Warmwasserzufuhr 22 der Bearbeitungseinrichtung 14 zugeführt werden. Aufgrund des warmen Wassers kann bereits in der Bearbeitungseinrichtung 14 unter Verwendung von Kasein und/oder Caprolactam eine Lösung hergestellt werden. Die Lösung, in der auch noch nicht gelöste Anteile des zumindest einen Grundstoffes enthalten sein können, wird über einen Ausgang 26 der Bearbeitungseinrichtung 14 zu einem Eingang 28 des Reaktors 12 geleitet. In dem Rektor 12 kann die Lösung gespeichert, gegebenenfalls gemischt und auch mit Warmwasser von der Warmwasserzufuhr 16 versetzt werden. Die Warmwasserzufuhr 16 ist jedoch optional. Es ist auch möglich, daß in das System 10 warmes Wasser lediglich über die Warmwasserzufuhr 22 der Bearbeitungseinrichtung 14 zugeführt wird. Alternativ dazu kann es auch möglich sein, daß die Bearbeitungseinrichtung 14 frei von der Warmwasserzufuhr 22 ist und warmes Wasser dem System ausschließlich über die Warmwasserzufuhr 16 des Reaktors 12 zugeführt wird.

In dem in Figur 2 gezeigten System 10 wird nach einem initialen Schritt der Bearbeitungseinrichtung 14 durch den Eingang 20 ein Lösungsmittel zugeführt. Das Lösungsmittel kann zuerst warmes Wasser sein und, nach Zufuhr der Lösung in den Rektor 12, diese Lösung sein. Ebenso wird der Bearbeitungseinrichtung 14 durch die Warmwasserzufuhr 22 ein Lösungsmittel zugeführt. Beispielsweise kann das Lösungsmittel, das durch Eingang 20 zugeführt wird, und das Lösungsmittel, das durch die Warmwasserzufuhr 22 zugeführt wird, in der Bearbeitungseinrichtung 14 gemischt werden und mit Grundstoffen, beispielsweise Kasein und/oder Caprolactam versetzt werden.

Es ist auch möglich, daß dem Reaktor 12 Warmwasser erst zugeführt wird, sobald über den Eingang 28 auch eine Lösung in dem Reaktor 12 vorhanden ist. Beispielsweise kann dann auch die Zufuhr von Warmwasser und/oder Ammoniak durch den Eingang 22 gestoppt werden. Die in dem Reaktor 12 vorhandene Lösung kann kontinuierlich durch das System 10 strömen, insbesondere gepumpt werden. Hierbei kann die in dem Reaktor 12 vorhandene Lösung als Lösungsmittel dienen und mittels des Eingangs 20 der Bearbeitungseinrichtung 14 zugeführt werden. Dieses Lösungsmittel kann beispielsweise mit weiteren Grundstoffen versehen werden und als Lösung (in der auch nichtgelöste Grundstoffanteile vorhanden sein könne, d.h. als Dispersion) durch Ausgang 26 von der Bearbeitungseinrichtung ausgegeben werden und dem Reaktor 12 wieder mittels des Eingangs 28 zugeführt werden. In dem Reaktor kann insbesondere eine weitere Lösung noch nicht gelöster Grunstoffteilchen erfolgen.

Die in dem Reaktor 12 vorhandene Lösung bzw. Dispersion kann auch der Bearbeitungseinrichtung 14 durch den Eingang 20 zugeführt werden und ohne weitere Zugabe von Warmwasser und/oder ohne weitere Zugabe von Grundstoffen weiter verarbeitet werden. Beispielsweise kann/können in der Bearbeitungseinrichtung 14 der/die Grundstoff(e) weiter verkleinert, insbesondere gemahlen werden, so daß die Löslichkeit des zumindest einen Grundstoffes aufgrund der verringerten Teilchengröße bzw. der erhöhten Gesamtoberfläche der Teilchen erhöht wird.

Mit der Abwärme der Bearbeitungseinrichtung 14, die beispielsweise aufgrund von mechanischer Reibung eines Elektromotors (gezeigt in Figur 3) der Bearbeitungseinrichtung 14 und/oder aufgrund von Reibungswärme eines Mahlwerks bzw. eines Dispergierwerks entsteht, kann das in der Bearbeitungseinrichtung vorhandene Lösungsmittel und/oder die vorhandene Lösung gewärmt werden, insbesondere bei einer vorbestimmten Temperatur gehalten werden.

Es ist auch möglich, daß zusätzlich oder alternativ dazu aufgrund einer thermischen Kopplung 30 Abwärme an den Reaktor 12 gekoppelt wird, insbesondere in den Reaktor 12 eingeführt wird. Dadurch kann die in dem Reaktor 12 vorhandene Lösung bzw. Dispersion gewärmt werden, insbesondere auf eine vorbestimmte Temperatur gebracht und/oder bei der vorbestimmten Temperatur gehalten werden, wodurch ebenfalls die Lösungsgeschwindigkeit des noch nicht gelösten zumindest einen Grundstoffes erhöht wird. Eine zusätzliche, insbesondere externe Wärmeerzeugung, beispielsweise aufgrund einer Dampfheizung kann hierbei vorteilhafterweise vermieden werden. Insbesondere kann jedoch ausgenutzt werden, daß der Reaktor aus thermisch schlecht leitendem Material hergestellt ist und/oder doppelwandig ausgebildet und somit isoliert ist, um in einfacher Weise eine möglichst konstante Temperatur zu ermöglichen.

Figur 3 zeigt eine bevorzugte Ausführungsform des Systems 10. Das System 10 umfaßt den Reaktor 12, der in dieser Ausführungsform einwandig ausgeführt ist. Ferner umfaßt das System 10 die Bearbeitungseinrichtung 14, die von einem Elektromotor 32 angetrieben ist. Weiterhin umfaßt die Bearbeitungseinrichtung 14 eine (optionale) Warmwasserzufuhr 22 und einen Eingang 24 für einen oder mehrere Grundstoff(e). Die Grundstoffe bzw. das Grundstoffgemisch sind/ist beispielsweise in einem sogenannten "Big Bag" 34 als bevorzugter Grundstoffbereitstellungseinrichtung 34 gespeichert und können/kann mittels einer Pumpe 36 der Bearbeitungseinrichtung 24 zugeführt werden. Es können auch mehrere "Big Bags" und/oder andere Grundstoffbereitstellungseinrichtungen vorhanden sein. Es beispielsweise pro Grundstoff eine Grundstoffbereitstellungseinrichtung vorhanden sein.

Der Ausgang 26 der Bearbeitungseinrichtung 14 ist durch ein Rohr bzw. eine Leitung 38 mit dem Eingang 28 des Reaktors 12 verbunden. Somit kann die Lösung bzw. Dispersion dem Reaktor 12 zugeführt werden.

Der Reaktor 12 kann weiterhin einen Mischer 40 umfassen, mit welchem die Lösung bzw. Dispersion, die in dem Reaktor 12 gespeichert ist, durchgemischt wird. Die Lösung bzw. Dispersion kann insbesondere kontinuierlich durchgemischt werden. Durch das Mischen kann die Lösungsgeschwindigkeit der noch nicht gelösten Grundstoffteilchen erhöht werden. Alternativ oder zusätzlich kann auch die Abwärme des Mischers 40 verwendet werden, um die in dem Reaktor 12 vorhandene Lösung bzw. Dispersion zu wärmen. Der Reaktor 12 kann auch ohne einen konkreten Mischer 40 ausgebildet sein. Beispielsweise kann es ausreichend sein, die Lösung bzw. Dispersion von oben in den Reaktor 12 einzufüllen, so daß die zugeführte Lösung bzw. Dispersion ausreichend mit bereits vorhandener Lösung bzw. Dispersion vermischt wird. Insbesondere ist es möglich, daß die zugeführte Lösung bzw. Dispersion mit bereits im Reaktor vorhandener Lösung bzw. Dispersion aufgrund von Temperaturunterschieden und/oder Dichteunterschieden und/oder Einströmgeschwindigkeit der Lösung in die Speichereinrichtung vermischt wird.

In anderen Worten wird gemäß einer bevorzugten Ausführungsvariante des Verfahrens zuerst warmes Wasser als bevorzugtes warmes Lösungsmittel zugeführt. Das warme Wasser befindet sich in der Speichereinrichtung 12 und wird von der Speichereinrichtung 12 an die Dispergierungsmaschine 14 abgegeben. Sobald das notwendige warme Wasser in der Speichereinrichtung 12 vorhanden ist, wird dem Kreislauf vorzugsweise kein weiteres warmes Wasser mehr zugeführt.

Anschließend kann Caprolactam insbesondere in Tablettenform zugegeben werden. Caprolactam ist grundsätzlich wasserlöslich. Durch zerkleinern in der Dispergierungsmaschine 14 als bevorzugter Bearbeitungseinrichtung 14 wird die Oberfläche des ursprünglich tablettenförmigen Caprolactams vergrößert. Aufgrund der erhöhten Oberfläche und auch aufgrund der Temperatur des warmen Lösungsmittels löst sich das Caprolactam bereits in der Dispergierungsmaschine 14 zumindest teilweise in dem warmen Lösungsmittel. Nachdem dem warmen Lösungsmittel das Caprolactam vollständig zugeführt wurde, wird als nächstes Kasein, vorzugsweise in Pulverform zugeführt. Da Kasein nur bedingt bzw. im wesentlichen nicht in Wasser löslich ist, löst sich Kasein nur teilweise in dem warmen Lösungsmittel und bildet mit dem warmen Lösungsmittel (in dem bereits Caprolactam zumindest teilweise, vorzugsweise vollständig gelöst ist) eine Dispersion. Diese Dispersion befindet sich in dem Kreislauf und kann auch mehrere Male wiederholt die Dispergierungsmaschine durchlaufen. Sobald das Kasein vollständig in das warme Lösungsmittel eingebracht ist, wobei, wie oben ausgeführt, sich nur ein Teil des Kaseins löst und mit dem Lösungsmittel insbesondere eine Dispersion bildet, wird dem warmen Lösungsmittel Ammoniak zugeführt. Ammoniak kann beispielsweise als wässrige Lösung mit einem Anteil von Ammoniak von 25% zugeführt werden. Dadurch wird ermöglicht, daß sich Kasein in dem warmen Lösungsmittel löst. Die vorgenannten Grundstoffe, d.h. Caprolactam, Kasein und Ammoniak (vorzugsweise in wässriger Lösung) werden nacheinander über einen einzigen Eingang 24 der Dispergierungsmaschine 14 zugeführt. Es ist auch möglich, daß die Dispergierungsmaschine 14 mehrere Eingänge aufweist.

Das vorgenannte Verfahren wird vorzugsweise solange durchgeführt, bis die Lösung eine Temperatur von etwa 70°C aufweist, wobei das vorgewärmte Lösungsmittel aufgrund der notwendigen Lösungsenergie der gelösten Grundstoffe abkühlt und mittels der Dispergierungsmaschine 14 gewärmt wird. Somit können zum einen Wärmeverluste beispielsweise aufgrund der Lösung der Grundstoffe in dem Lösungsmittel und/oder aufgrund von Wärmeabgabe an die Umgebung mittels der Dispergierungsmaschine 14 ausgeglichen werden. Zusätzlich oder alternativ ist es auch möglich, daß das warme Lösungsmittel ein Anfangstemperatur von weniger als 70°C aufweist und die Dispergierungsmaschine 14 wird verwendet, um das warme Lösungsmittel bzw. die Lösung weiter zu erwärmen, insbesondere auf etwa 70°C. Beispielsweise kann das oben beschriebene Verfahren etwa 0,5 Stunden andauern, um zwischen etwa 3 bis etwa 6 Tonnen insbesondere etwa 5 Tonnen Bindemittel für Tiefdruckfarbe herzustellen.

Wenn das Bindemittel hergestellt ist, wird das Bindemittel gekühlt. Um ein Eindicken des Bindemittels zu vermeiden bzw. möglichst gering zu halten wird das Bindemittel vorzugsweise innerhalb von etwa 0,5 Stunden bis etwa 1,5 Stunden, besonders bevorzugt innerhalb etwa 1 Stunde gekühlt. Die Temperatur des Bindemittels kann insbesondere auf etwa 50°C bis etwa 30°C, insbesondere auf etwa 40°C gekühlt werden.

Die vorliegende Beschreibung der bevorzugten Ausführungsformen ist nicht auf die oben beschriebenen jeweiligen Figuren beschränkt. Vielmehr gelten die Ausführungen zu Figur 2 sinngemäß auch für die Figur 3 und umgekehrt. Ebenso gelten die zu den Figuren gemachten Ausführungen auch für die vorangegangenen Aspekte und Ausführungsformen. Somit können mittels der zu den Figuren beschrieben Einzelmerkmalen und/oder Einzelmerkmalen der Aspekte und/der Ausführungsformen weitere bevorzugte Ausführungsformen gebildet werden.

### Bezugszeichenliste

- 10: System
- 12: Reaktor
- 14: Bearbeitungseinrichtung
- 16: Warmwasserzufuhr des Reaktors
- 18: Ausgang des Reaktors
- 20: Eingang der Bearbeitungseinrichtung
- 22: Warmwasserzufuhr der Bearbeitungseinrichtung
- 24: Eingang der Bearbeitungseinrichtung
- 25: Eingang der Bearbeitungseinrichtung
- 26: Ausgang der Bearbeitungseinrichtung
- 28: Eingang des Reaktors
- 30: thermische Kopplung
- 32: Elektromotor
- 34: Big Bag/Grundstoffbereitstellungseinrichtung
- 36: Pumpe
- 38: Rohr/Leitung
- 40: Mischer
- 112: Reaktor
- 116: Kaltwasserzugang
- 128: Zugang
- 142: Hohlraum
- 144: Dampferzeugungseinrichtung

## Patentansprüche

1. System (10) zum Herstellen einer Lösung, insbesondere eines Bindemittels für Tiefdruckfarbe mit
- zumindest einer Grundstoffbereitstellungseinrichtung (34),
- zumindest einer Bearbeitungseinrichtung (14) und
- zumindest einer Speichereinrichtung (12), wobei
die Grundstoffbereitstellungseinrichtung (34), die Bearbeitungseinrichtung (14) und die Speichereinrichtung (12) derart miteinander verbunden sind, daß der Bearbeitungseinrichtung (14) zumindest ein Grundstoff von der Grundstoffbereitstellungseinrichtung (34) und ein warmes Lösungsmittel zuführbar sind, wobei die Bearbeitungseinrichtung (14) ausgelegt ist, die Teilchengröße des zumindest einen Grundstoffs derart anzupassen, daß sich der zumindest eine Grundstoff zumindest teilweise in dem warmen Lösungsmittel löst und somit eine Lösung herstellbar ist, und die Bearbeitungseinrichtung (14) genau einen Lösungsmittelzugang (20) aufweist, der mit einem Lösungsmittelausgang (18) der Speichereinrichtung (12) verbunden ist,
wobei die Bearbeitungseinrichtung (14) ausgelegt ist, Abwärme der Bearbeitungseinrichtung (14) an das warme Lösungsmittel und/oder die Lösung abzugeben und die Bearbeitungseinrichtung (14) und die Speichereinrichtung (12) derart thermisch miteinander verbunden sind, daß mittels der Abwärme der Bearbeitungseinrichtung (14) die Speichereinrichtung (12) gewärmt wird.

2. System (10) nach Anspruch 1, wobei die Bearbeitungseinrichtung (14) und die Speichereinrichtung (12) in einem Kreislauf angeordnet sind, wobei die Bearbeitungseinrichtung (14) ausgelegt ist, die Lösung an die Speichereinrichtung (12) abzugeben und die Speichereinrichtung (12) ausgelegt ist, das warme Lösungsmittel an die Bearbeitungseinrichtung (14) abzugeben.

3. System (10) nach Anspruch 2, wobei die Speichereinrichtung (12) ausgelegt ist, daß in der Speichereinrichtung (12) die Lösung und das warme Lösungsmittel zu dem warmen Lösungsmittel vermischt werden, das an die Bearbeitungseinrichtung (14) abgegeben wird.

4. System (10) nach einem der vorangegangenen Ansprüche, wobei die Speichereinrichtung (12) und die Bearbeitungseinrichtung (14) ausgelegt sind, kontinuierlich zu arbeiten.

5. System (10) nach einem der vorangegangenen Ansprüche, wobei das warme Lösungsmittel eine Temperatur zwischen etwa 40°C und etwa 90°C, vorzugsweise zwischen etwa 50°C und etwa 80°C, besonders bevorzugt etwa 70°C aufweist.

6. System (10) nach einem der vorangehenden Ansprüche, wobei die Bearbeitungseinrichtung (14) eine Dispergierungsmaschine, insbesondere eine inline Dispergierungsmaschine ist und/oder
wobei die Bearbeitungseinrichtung (14) ausgelegt ist, die Teilchengröße des zumindest einen Grundstoffe dadurch anzupassen, daß der zumindest eine Grundstoff verkleinert wird, wobei der zumindest eine Grundstoff auf eine Teilchengröße von etwa 10 µm bis etwa 70 µm, vorzugsweise etwa 15 µm bis etwa 40 µm, besonders bevorzugt etwa 25 µm zerkleinert wird.

7. System (10) nach einem der vorangegangenen Ansprüche, wobei die Grundstoffe technisches Kasein und/oder Caprolactam und/oder Ammoniak umfassen.

8. Verfahren zum Herstellen einer Lösung, insbesondere eines Bindemittels für Tiefdruckfarbe, mit den Schritten:
- Bereitstellen zumindest eines Grundstoffes,
- Bereitstellen eines warmen Lösungsmittels,
- Zuführen des zumindest einen Grundstoffes und des warmen Lösungsmittels in zumindest eine Bearbeitungseinrichtung (14),
- Herstellen einer Lösung mittels des zumindest einen Grundstoffes und des warmen Lösungsmittels dadurch, daß der zumindest eine Grundstoff mittels der Bearbeitungseinrichtung (14) auf eine vorgegebene Teilchengröße angepaßt wird, so daß sich der zumindest eine Grundstoff zumindest teilweise in dem warmen Lösungsmittel löst und
- Zuführen der Lösung in zumindest eine Speichereinrichtung (12),
wobei das warme Lösungsmittel in der Speichereinrichtung (12) mit der Abwärme der Bearbeitungseinrichtung (14) gewärmt wird.

9. Verfahren nach Anspruch 8, mit den weiteren Schritten:
- Mischen der Lösung mit dem warmen Lösungsmittel in der Speichereinrichtung (12) und
- Zuführen der Mischung aus Lösung und warmen Lösungsmittel als warmes Lösungsmittel in die Bearbeitungseinrichtung (14).

10. Verfahren nach Anspruch 9, wobei die Schritte
- Zuführen des zumindest einen Grundstoffes und des warmen Lösungsmittel in die Bearbeitungseinrichtung (14),
- Herstellen der Lösung mittels des zumindest einen Grundstoffes und des warmen Lösungsmittels,
- Zuführen der Lösung in die Speichereinrichtung (12) und
- Mischen der Lösung mit dem warmen Lösungsmittel in der Speichereinrichtung (12)
wiederholt, insbesondere kontinuierlich durchgeführt werden.

11. Verfahren nach einem der Ansprüche 8 bis 10 mit dem weiteren Schritt:
Kühlen des Bindemittels nach Herstellen des Bindemittels.

## Claims

1. System (10) for producing a solution, in particular a binder for gravure printing ink having
- at least one base material provision unit (34),
- at least one processing unit (14), and
- at least one storage unit (12), wherein
the base material provision unit (34), the processing unit (14), and the storage unit (12) are connected to one another such that the processing unit (14) can be supplied with at least one base material by the base material provision unit (34) and a warm solvent, wherein the processing unit (14) is designed to adapt the particle size of the at least one base material such that the at least one base material at least partially dissolves in the warm solvent and therefore a solution is producible, and the processing unit (14) has precisely one solvent access (20), which is connected to a solvent outlet (18) of the storage unit (12),
wherein the processing unit (14) is designed to discharge waste heat of the processing unit (14) to the warm solvent and/or the solution and the processing unit (14) and the storage unit (12) are thermally connected to one another in such a manner that the storage unit (12) is heated by means of the waste heat of the processing unit (14).

2. System (10) according to Claim 1, wherein the processing unit (14) and the storage unit (12) are arranged in a circuit, wherein the processing unit (14) is designed to discharge the solution to the storage unit (12) and the storage unit (12) is designed to discharge the warm solvent to the processing unit (14).

3. System (10) according to Claim 2, wherein the storage unit (12) is designed such that the solution and the warm solvent are mixed in the storage unit (12) to form the warm solvent which is discharged to the processing unit (14).

4. System (10) according to any one of the preceding claims, wherein the storage unit (12) and the processing unit (14) are designed to operate continuously.

5. System (10) according to any one of the preceding claims, wherein the warm solvent has a temperature between approximately 40°C and approximately 90°C, preferably between approximately 50°C and approximately 80°C, particularly preferably approximately 70°C.

6. System (10) according to any one of the preceding claims, wherein the processing unit (14) is a dispersing machine, in particular an in-line dispersing machine, and/or
wherein the processing unit (14) is designed to adapt the particle size of the at least one base material in that the at least one base material is pulverized, wherein the at least one base material is pulverized to a particle size of approximately 10 µm to approximately 70 µm, preferably approximately 15 µm to approximately 40 µm, particularly preferably approximately 25 µm.

7. System (10) according to any one of the preceding claims, wherein the base materials comprise industrial casein and/or caprolactam and/or ammonia.

8. Method for producing a solution, in particular a binder for gravure printing ink, having the following steps:
- providing at least one base material,
- providing a warm solvent,
- supplying the at least one base material and the warm solvent into at least one processing unit (14),
- producing a solution by means of the at least one base material and the warm solvent in that the at least one base material is adapted by means of the processing unit (14) to a predefined particle size, so that the at least one base material at least partially dissolves in the warm solvent, and
- supplying the solvent into at least one storage unit (12),
wherein the warm solvent is warmed in the storage unit (12) using the waste heat of the processing unit (14).

9. Method according to Claim 8, having the following further steps:
- mixing the solution with the warm solvent in the storage unit (12) and
- supplying the mixture made of solution and warm solvent as a warm solvent into the processing unit (14).

10. Method according to Claim 9, wherein the following steps
- supplying the at least one base material and the warm solvent into the processing unit (14),
- producing the solution by means of the at least one base material and the warm solvent,
- supplying the solution into the storage unit (12), and
- mixing the solution with the warm solvent in the storage unit (12) are carried out repeatedly, in particular continuously.

11. Method according to any one of Claims 8 to 10 having the following further step:
cooling the binder after production of the binder.

## Revendications

1. Appareillage (10) pour la préparation d'une solution, notamment d'un agent liant pour encre d'héliogravure, comportant
- au moins un dispositif d'approvisionnement de matière première (34),
- au moins un dispositif de traitement (14) et
- au moins un dispositif de stockage (12),
le dispositif d'approvisionnement de matière première (34), le dispositif de traitement (14) et le dispositif de stockage (12) étant reliés entre eux de telle sorte qu'au moins une matière première provenant du dispositif d'approvisionnement de matière première (34) et un solvant chaud sont amenables dans le dispositif de traitement (14), le dispositif de traitement (14) étant agencé pour adapter la dimension des particules d'au moins une matière première de sorte que ladite au moins une matière première se dissout au moins partiellement dans le solvant chaud produisant ainsi une solution, et le dispositif de traitement (14) comportant précisément une alimentation de solvant (20) qui est reliée à une sortie de solvant (18) du dispositif de stockage (12),
le dispositif de traitement (14) étant agencé de façon à transmettre la chaleur perdue qu'il (14) produit au solvant chaud et/ou à la solution, et le dispositif de traitement (14) et le dispositif de stockage (12) étant reliés thermiquement entre eux de telle sorte que la chaleur perdue produite par le dispositif de traitement (14) chauffe le dispositif de stockage (12).

2. Appareillage (10) selon la revendication 1, le dispositif de traitement (14) et le dispositif de stockage (12) étant agencés dans un circuit, le dispositif de traitement (14) étant agencé pour alimenter la solution au dispositif de stockage (12) et le dispositif de stockage (12) étant agencé pour alimenter le solvant chaud au dispositif de traitement (14).

3. Appareillage (10) selon la revendication 2, le dispositif de stockage (12) étant agencé de sorte que dans celui-ci la solution et le solvant chaud sont mélangés au solvant chaud qui est alimenté au dispositif de traitement (14).

4. Appareillage (10) selon l'une des revendications précédentes, le dispositif de stockage (12) et le dispositif de traitement (14) étant agencés pour fonctionner en continu.

5. Appareillage (10) selon l'une des revendications précédentes, le solvant chaud présentant une température comprise entre environ 40°C et environ 90°C, de préférence entre environ 50°C et environ 80°C, de façon particulièrement préférée une température d'environ 70°C.

6. Appareillage (10) selon l'une des revendications précédentes, le dispositif de traitement (14) étant un disperseur, notamment un disperseur en ligne et/ou le dispositif de traitement (14) étant agencé pour adapter la dimension des particules de ladite au moins une matière première en la diminuant, et ce en la broyant à une dimension de particules allant d'environ 10 µm à environ 70 µm, de préférence d'environ 15 µm à environ 40 µm, notamment environ 25 µm.

7. Appareillage (10) selon l'une des revendications précédentes, les matières premières comprenant de la caséine de qualité technique et/ou du caprolactame et/ou de l'ammoniac.

8. Procédé pour la préparation d'une solution, notamment d'un agent liant pour encre d'héliogravure, comportant les étapes :
- mise à disposition d'au moins une matière première,
- mise à disposition d'un solvant chaud,
- alimentation de ladite au moins une matière première et du solvant chaud dans au moins un dispositif de traitement (14),
- préparation d'une solution à l'aide de ladite au moins une matière première et du solvant chaud moyennant adaptation dans le dispositif de traitement (14) de ladite au moins une matière première à une dimension de particules prédéterminée de telle sorte que ladite au moins une matière première se dissout au moins partiellement dans le solvant chaud et
- alimentation de la solution dans au moins un dispositif de stockage (12), le solvant chaud étant chauffé dans le dispositif de stockage (12) à l'aide de la chaleur perdue générée par le dispositif de traitement (14).

9. Procédé selon la revendication 8 comportant encore les étapes suivantes :
- mélange de la solution avec le solvant chaud dans le dispositif de stockage (12) et
- alimentation du mélange de solution et solvant chaud en tant que solvant chaud dans le dispositif de traitement (14).

10. Procédé selon la revendication 9, les étapes
- alimentation de ladite au moins une matière première et du solvant chaud dans le dispositif de traitement (14),
- préparation de la solution à l'aide de ladite au moins une matière première et du solvant chaud,
- alimentation de la solution dans le dispositif de stockage (12) et
- mélange de la solution avec le solvant chaud dans le dispositif de stockage (12)
étant répétées, notamment effectuées en continus.

11. Procédé selon l'une des revendications 8 à 10 comportant encore l'étape suivante : refroidissement de l'agent liant après sa préparation.
